Europäisches Patentamt

European Patent Office

Office européen des brevets

(19)

(11) Numéro de publication : **0 434 582 A1**

## (12) DEMANDE DE BREVET EUROPEEN

(21) Numéro de dépôt : 90420568.9

(22) Date de dépôt : 21.12.90

(51) Int. Cl.⁵ : **H02G 1/02, H02G 7/05**

(30) Priorité : 22.12.89 FR 8917398

(43) Date de publication de la demande :
**26.06.91 Bulletin 91/26**

(84) Etats contractants désignés :
**BE DE DK ES FR GB GR IT LU NL SE**

(71) Demandeur : **SOCIETE INDUSTRIELLE DE MATERIEL ELECTRIQUE SIMEL
Route de Saulon
F-21220 Gevrey Chambertin (FR)**

(72) Inventeur : **Daloz, Joanny
15 Rue de la Charmette
F-21000 Dijon (FR)**

(74) Mandataire : **Monnier, Guy et al
Cabinet Monnier 150 Cours Lafayette B.P. 3058
F-69393 Lyon Cédex 03 (FR)**

(54) **Procédé et outillage pour le rétreint de manchons sur les câbles des réseaux aériens d'alimentation électrique.**

(57)    Procédé pour le rétreint des manchons fixés sur les câbles multibrins torsadés des réseaux électriques aériens, caractérisé en ce qu'il consiste à introduire le manchon (1), engagé sur le câble (2), entre deux rouleaux à gorge (3) disposés symétriquement par rapport à un axe passant par leurs génératrices, la section définie par les gorges desdits rouleaux étant égale à celle (d) désirée pour le manchon à rétreindre, et à entraîner en rotation ces rouleaux de façon à déplacer axialement le manchon qui est ainsi soumis à une opération de laminage.

Fig. 1

EP 0 434 582 A1

On sait que les réseaux d'électrification sont généralement réalisés à l'aide de câbles multibrins torsadés qui sont accrochés à des structures propres à les maintenir à une hauteur appropriée au-dessus du sol. La mise en oeuvre pratique d'un tel système implique le recours à des manchons qui sont destinés à être ancrés sur le câble envisagé afin d'assurer soit le cheminement électrique suivant les normes en vigueur, soit la tenue mécanique dudit câble avec un autre ou avec une structure portante (pylones, poteaux, consoles, etc...). Suivant les cas, ces manchons sont désignés en pratique sous les noms de manchons de jonction, manchons d'ancrage ou cosses.

La solution ordinairement employée consiste à engager sur le câble un tube (généralement en aluminium) présentant une longueur et une épaisseur convenables, puis, à l'aide d'un outillage portatif de rétreint, à presser fortement sur l'extérieur dudit tube ou manchon afin de l'écraser sur le câble. Le contact électrique est assuré grâce à la forte pression développée tandis que la tenue mécanique résulte de la bonne interpénétration du métal du manchon avec les brins torsadés du câble.

Pour cette opération de manchonnage, on procède depuis longtemps suivant le système dit du "rétreint hexagonal", lequel fait appel à deux matrices recréant un profil hexagonal, qui sont associées à un outillage portatif à actionnement manuel, électrique ou hydraulique propre à engendrer une forte pression sur lesdites matrices et, en conséquence, sur le manchon engagé sur le câble. L'opération nécessite bien entendu plusieurs passes successives dont le nombre est fonction de la longueur du manchon à rétreindre et de la largeur des matrices (cette largeur étant évidemment liée à la force développée par l'outillage utilisé).

Ce système du "rétreint hexagonal" présente l'avantage d'impliquer des outillages simples d'emploi, dont la légèreté autorise l'utilisation directe in situ, c'est-à-dire à la hauteur de la ligne aérienne envisagée. Par contre, il comporte certains inconvénients du fait notamment que le nombre de passes à effectuer pour le rétreint d'un même manchon est important, avec le risque qu'elles ne soient pas toutes correctement réalisées. Les opérateurs doivent s'assurer que les matrices montées sur l'outillage correspondent bien au manchon envisagé, et que les passes successives sont bien réalisées côte à côte, sans espace intermédiaire, si bien que la qualité du travail est étroitement liée au professionnalisme du personnel. On observera par ailleurs que les passes successives de rétreint tendent à conférer au manchon un profil arqué, gênant en pratique.

Plus récemment, on a proposé le système dit de "l'étiré", lequel utilise également deux matrices dont le profil est agencé pour recréer un diamètre inférieur à celui du manchon à rétreindre. Dans ce cas, l'outillage comprend deux mâchoires aptes à s'agripper sur le manchon pour tirer celui-ci entre les matrices, ledit manchon étant ainsi filé au diamètre prévu.

On comprend qu'une fois mis en place, l'outillage est susceptible d'effectuer le travail en un nombre de passes successives relativement faible, fonction de la course du vérin ou autre moyen de traction associé aux mâchoires. L'effort d'étirage est appliqué dans l'axe du manchon qui conserve ainsi sa rectitude initiale. Par contre, l'outillage est encombrant et lourd, en se prêtant mal aux opérations in situ ; par ailleurs, la mise en oeuvre est malaisée et le système convient mal aux petites sections.

C'est aux inconvénients des systèmes classiques qu'entend remédier la présente invention, laquelle a pour objet le procédé de rétreint qui est défini à la revendication 1.

En fait, suivant l'invention le manchon à rétreindre est introduit entre deux rouleaux à gorge disposés symétriquement par rapport à un axe passant par leurs génératrices, la section définie par les gorges desdits rouleaux étant égale à celle désirée pour le manchon à l'état rétreint ; ces rouleaux sont ensuite entraînés en rotation de façon à déplacer axialement le manchon qui est ainsi soumis à une opération de laminage.

Outre le procédé de rétreint ci-dessus indiqué, l'invention a encore pour objet l'outillage propre à la mise en oeuvre dudit procédé, lequel outillage, défini à la revendication 6, comprend deux rouleaux portés à rotation par un bâti et associés à un dispositif d'actionnement monté sur le bâti précité et propre à assurer l'entrainement simultané en rotation des rouleaux.

Le dessin annexé, donné à titre d'exemple, permettra de mieux comprendre l'invention, les caractéristiques qu'elle présente et les avantages qu'elle est susceptible de procurer :

Fig. 1 est une vue en perspective illustrant schématiquement le procédé de rétreint suivant l'invention.

Fig. 2 est une vue de côté montrant la mise en oeuvre de ce procédé dans le cas d'un manchon d'ancrage.

Fig. 3 et 4 sont des vues en bout représentant les deux rouleaux à deux positions angulaires différentes.

Fig. 5 illustre en coupe une variante.

Fig. 6 est une coupe axiale de l'outillage pour la mise en oeuvre du procédé suivant l'invention.

Fig. 7 montre en perspective les pièces principales de l'outillage suivant fig. 6, préalablement à leur assemblage.

Fig. 8 est une vue de côté illustrant la mise en place du câble et du manchon moyennant ouverture de l'outillage suivant fig. 6 et 7.

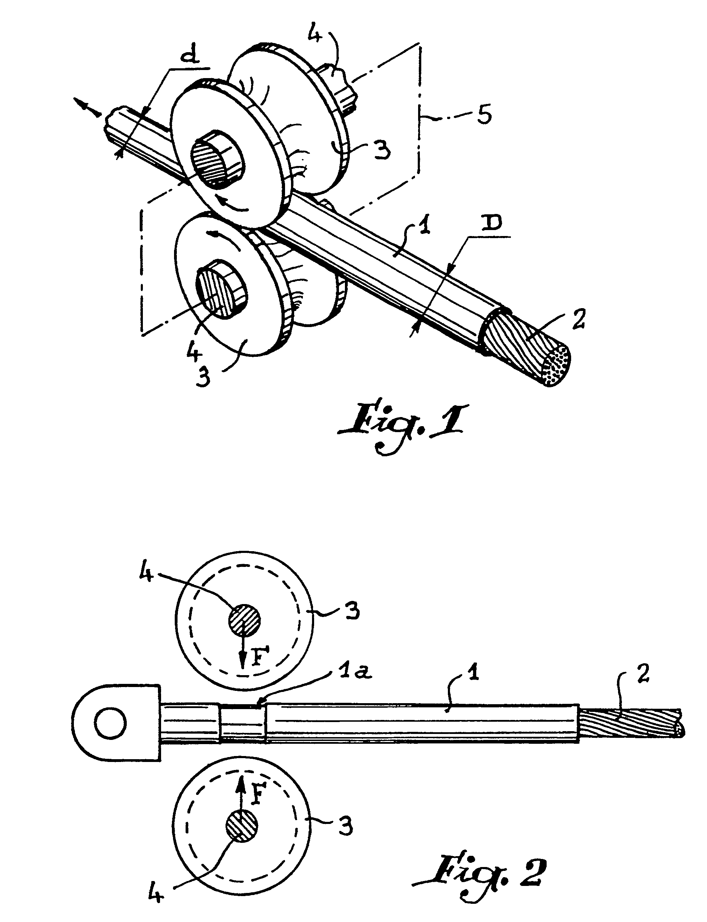

Comme indiqué précédemment et comme schématiquement illustré en fig. 1, le procédé suivant l'invention pour le rétreint d'un manchon 1, préalablement engagé sur un câble multibrins torsadé 2, consiste à introduire le complexe 1-2 entre deux rouleaux à gorge 3 montés sur des axes ou arbres 4, lesquels sont eux-mêmes supportés par un bâti schématisé en 5 de manière à être rigidement maintenus en place. Les deux rouleaux 3, ainsi disposés symétriquement par rapport à un axe passant par leurs génératrices, sont entraînés en rotation de façon telle que si la section du passage défini par leurs gorges présente un diamètre $d$, le complexe 1-2, comportant à l'origine un diamètre extérieur D correspondant à celui du manchon 1, sera happé et entraîné par lesdits rouleaux et sera soumis à une opération de laminage qui amènera le manchon à la cote $d$ requise, sans affecter en rien la rectitude de son profil initial.

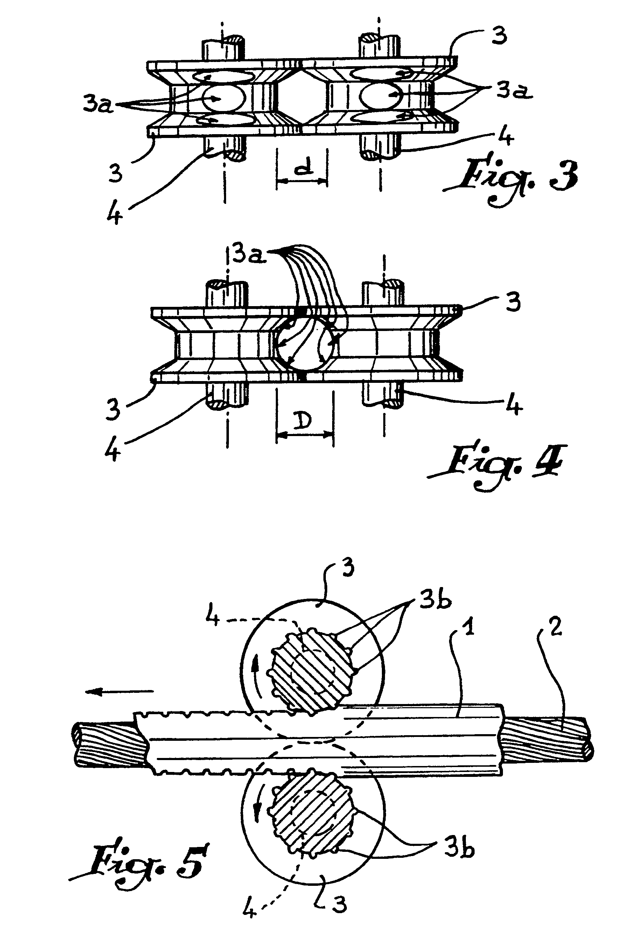

Pour permettre l'engagement du complexe 1-2 entre les rouleaux 3 et son retrait en fin de travail, tout particulièrement lorsque le câble 2 présente une grande longueur, il est bien entendu nécessaire de prévoir des moyens propres à permettre l'écartement momentané des axes ou arbres 4 des deux rouleaux 3, à la manière illustrée en fig. 2, ces derniers étant ramenés en position fermée après introduction (flèche F). Dans le cas des manchons d'ancrage du genre de celui représenté en fig. 2, il peut être avantageux de faire comporter audit manchon une dépression annulaire 1a dont le diamètre extérieur correspond à la cote $d$ indiquée ci-dessus.

Bien que le profil défini par les gorges des deux rouleaux 3 puisse être quelconque, il semble préférable de conformer chaque gorge de façon à obtenir pour le profil sus-visé la forme hexagonale représentée en fig. 3, dont la largeur définira la cote $d$. Afin de faciliter l'engagement du complexe 1-2 à section circulaire D (fig. 4) entre ces rouleaux 3, on fait comporter à la gorge de chacun de ceux-ci, en un point de leur circonférence, des empreintes 3a (fig. 3) intéressant les trois flancs du profil de ladite gorge. On conçoit que ces entailles 3a sont susceptibles d'être profilées et dimensionnées de façon telle que lorsque les empreintes des deux rouleaux 3 sont disposées en coïncidence (fig. 4), la section ainsi définie présente la cote D correspondant au diamètre extérieur initial du manchon 1. Cette disposition interdit en outre la mise en place d'un manchon initial présentant un diamètre supérieur à celui pour lequel les rouleaux 3 ont été établis.

On observera encore que dans le but de favoriser le déplacement axial du complexe 1-2 moyennant rotation des rouleaux 3, il peut être avantageux de faire comporter au fond de gorge de chacun desdits rouleaux des saillies référencées 3b en fig. 5, espacées les unes par rapport aux autres. La présence des empreintes engendrées par ces saillies au niveau de la périphérie du manchon rétreint permet le contrôle visuel de la qualité de l'opération et de l'utilisation de rouleaux 3 convenant bien au diamètre du manchon à rétreindre.

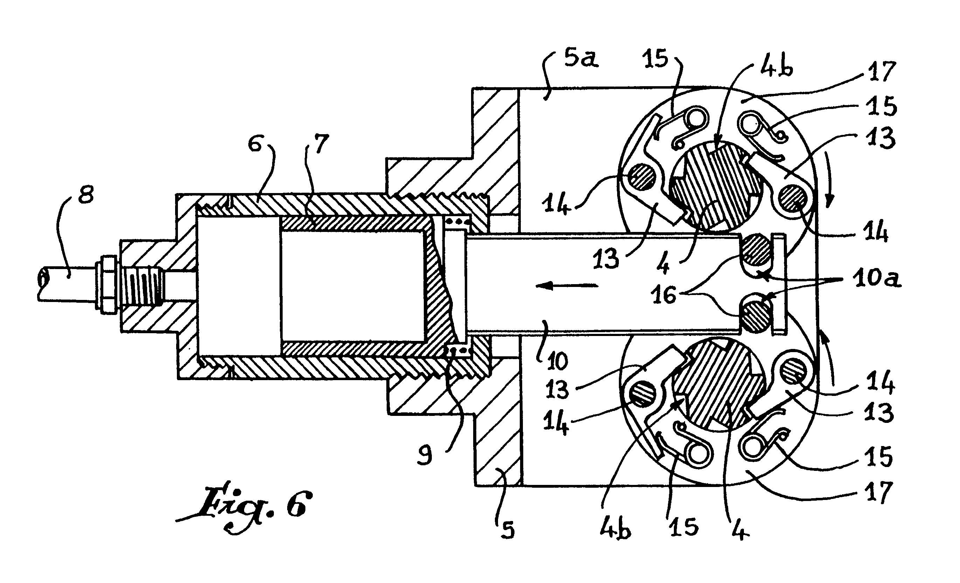

Fig. 6 à 8 illustrent une forme de réalisation de l'outillage destiné à la mise en oeuvre du procédé de manchonnage qui vient d'être exposé.

Cet outillage comprend un bâti 5 en forme de chape dont le voile central se prolonge à l'opposé des deux ailes 5a pour porter le cylindre 6 d'un vérin hydraulique dont le piston 7 est soumis à l'action antagoniste d'un fluide sous pression amené par une canalisation 8, et de moyens élastiques de rappel représentés sous la forme d'un ressort 9. Le piston 7 est solidaire axialement d'une tige plate 10 dont l'extrémité libre est découpée de deux encoches transversales 10a, opposées l'une à l'autre.

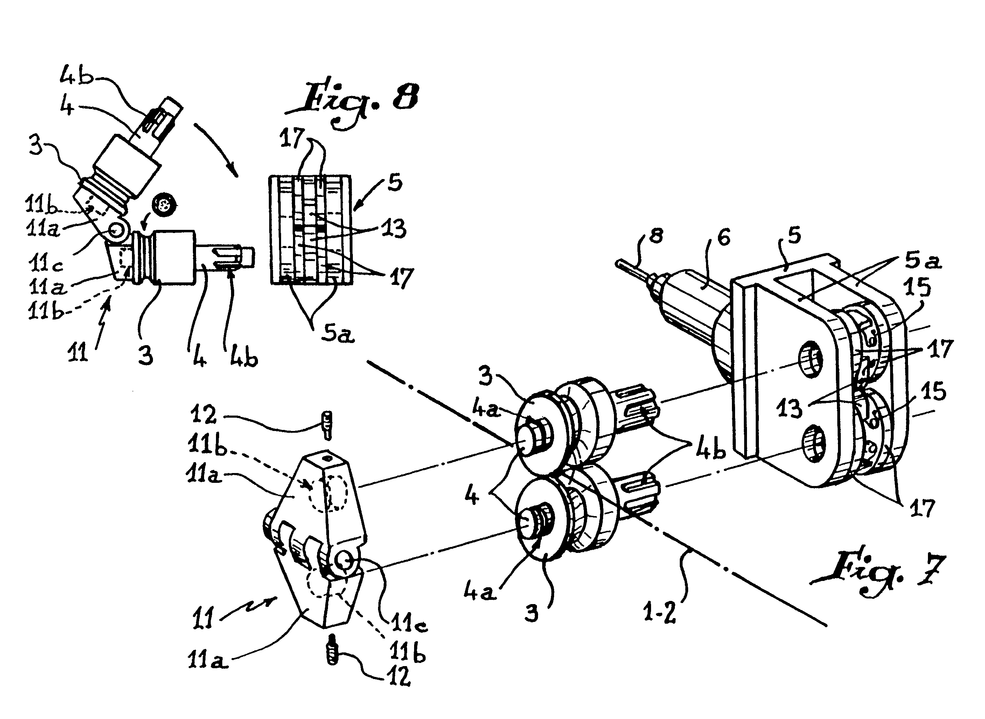

Comme plus particulièrement montré en fig. 7 et 8, contre l'une des ailes 5a du bâti ou chape 5 viennent s'appliquer les deux rouleaux à gorge 3 directement solidaires d'un arbre d'entraînement 4. Chaque arbre 4 se prolonge à l'opposé de l'aile 5a considérée pour venir s'engager dans un alésage borgne 11b pratiqué dans une entretoise amovible de maintien 11. Cette dernière est formée par deux pièces 11a assemblées à articulation à l'aide d'un axe central 11c. La retenue des arbres 4 dans l'entretoise 11 est opérée à l'aide de vis-pointeaux 12 qui sont vissées transversalement dans ladite entretoise et dont la pointe vient s'engager dans une rainure annulaire 4a desdits arbres.

A l'opposé de l'entretoise articulée 11, chaque arbre 4 est usiné pour présenter une série de dents 4b (fig. 6) dimensionnées de façon à venir se disposer entre les deux ailes 5a du bâti 5 à la position montée des deux arbres 4. Ces dents 4b sont profilées pour coopérer avec des cliquets 13 montés oscillants sur des axes 14 et rappelés par des ressorts 15, du type à lame en épingle dans l'exemple de réalisation envisagé.

En fait les axes 14, en liaison avec des goujons 16, asssurent la réunion de deux flasques 17 à profil circulaire, montés fous sur la partie dentée des arbres 4. On observera par ailleurs que les goujons 16 susmentionnés sont engagés à l'intérieur des encoches transversales 10a de la tige 10 du vérin 6-7.

Le fonctionnement et le mode d'utilisation de l'outillage ci-dessus décrit se comprennent aisément.

Pour la mise en place du complexe 1-2 entre les rouleaux 3, les arbres 4 sont extraits du bâti 5 et sont ouverts à la manière illustrée en fig. 4. L'ensemble est ensuite refermé et remis en état de fonctionnement, étant observé que pour l'engagement du complexe 1-2 entre les rouleaux, ceux-ci ont été bien entendu amenés de façon à ce que les empreintes 3a suivant fig. 3 et 4 se trouvent en coïncidence.

Il suffit alors d'actionner la pompe hydraulique (du type à actionnement manuel par levier ou par pédale, ou à entraînement électrique) associée au vérin 6-7. Le déplacement du piston 7 et de sa tige 10 dans le sens de gauche à droite en fig. 6 assure bien, par poussée des encoches 10a contre les goujons 16, le déplacement angulaire des deux flasques 17 et, par action des cliquets 13 sur les empreintes 4b, celui des arbres 4 et des rouleaux 3. Lorsque l'alimentation du vérin 6-7 est stoppée et que le piston 7 revient à sa position initiale sous l'effet du ressort 9, les cliquets 13 se soulèvent à l'encontre des ressorts 15 sans entraîner en rotation les arbres 4.

On conçoit finalement que les rouleaux 3 sont entraînés par saccades, en happant le complexe 1-2 qui est déplacé axialement en même temps qu'il est rétreint par laminage, à la façon exposée ci-dessus. Le nombre de courses aller et retour de l'organe mobile du vérin est réduit et l'on notera que l'outillage ne peut être aisément dégagé du manchon que lorsque les rouleaux 3 atteignent le câble en fin d'opération, ce qui est ne nature à éviter toute manoeuvre trop hâtive.

Il va de soi qu'on peut imaginer d'autres moyens pour l'actionnement en rotation des rouleaux 3, par exemple à l'aide de moteurs électriques ou hydrauliques.

Dans tous les cas, l'outillage suivant l'invention peut présenter un encombrement et un poids réduits qui permettent son utilisation in situ, à l'aide d'une perche ou autre support vertical.

On conçoit que le caractère démontable des rouleaux 3-4 permet leur remplacement par des molettes de sectionnement ou autres outils aptes à faciliter l'installation des réseaux électriques aériens. En outre, chaque arbre 4 peut être solidaire de plusieurs rouleaux à gorge pour permettre l'adaptation de l'outillage au type des manchons à rétreindre.

## Revendications

1. Procédé pour le rétreint des manchons fixés sur les câbles multibrins torsadés des réseaux électriques aériens, caractérisé en ce qu'il consiste à introduire le manchon (1), engagé sur le câble (2), entre deux rouleaux à gorge (3) disposés symétriquement par rapport à un axe passant par leurs génératrices, la section définie par les gorges desdits rouleaux étant égale à celle (d) désirée pour le manchon à rétreindre, et à entraîner en rotation ces rouleaux de façon à déplacer axialement le manchon qui est ainsi soumis à une opération de laminage.

2. Procédé suivant la revendication 1, caractérisé en ce qu'on fait comporter au manchon à rétreindre (1) une dépression annulaire (1a) dont le diamètre correspond à celui (d) de la section définie par les gorges des rouleaux (3), en vue de faciliter l'engagement du manchon (1) entre lesdits rouleaux.

3. Procédé suivant l'une quelconque des revendications 1 et 2, caractérisé en ce qu'on fait comporter à la gorge de chaque rouleau (3) un profil tel que la section définie par les deux rouleaux présente un profil hexagonal.

4. Procédé suivant la revendication 3, caractérisé en ce que chacun des trois flancs de la gorge de chaque rouleau (3) présente des empreintes (3a) qui, lorsque les empreintes des deux rouleaux ont été amenées en coïncidence, définissent une section présentant le diamètre initial (D) de la paroi extérieure du manchon (1) à rétreindre, en permettant ainsi l'engagement de celui-ci et en interdisant toute mise en place d'un manchon à plus fort diamètre.

5. Procédé suivant l'une quelconque des revendications 1 à 4, caractérisé en ce qu'on fait comporter au fond de la gorge de chaque rouleau (3) des saillies (3b) propres à faciliter l'entraînement axial du manchon (1) et à permettre le contrôle visuel immédiat de l'opération.

6. Outillage pour la mise en oeuvre du procédé suivant l'une quelconque des revendications 1 à 5, caractérisé en ce qu'il comprend deux rouleaux à gorge (3-4) portés à rotation par un bâti (5) et associés à un dispositif d'actionnement (6-7) monté sur ledit bâti et propre à assurer l'entraînement en rotation des rouleaux précités.

7. Outillage suivant la revendication 6, caractérisé en ce que le dispositif d'actionnement est constitué par un vérin hydraulique (6-7) dont la tige (10), animé d'un mouvement linéaire alternatif entraîne, par l'intermédiaire de mécanismes à cliquets (13-15-16), l'arbre (4) solidaire de chaque rouleau (3).

8. Outillage suivant l'une quelconque des revendications 6 et 7, caractérisé en ce que les rouleaux (3) avec leur arbre (4) sont prévus démontables du bâti (5), les extrémités libres de leurs arbres étant maintenus dans une entretoise amovible (11).

9. Outillage suivant la revendication 8, caractérisé en ce que l'entretoise (11) est formée par deux pièces (11a) articulées l'une à l'autre.

*Fig. 1*

*Fig. 2*

3

3a

3a

3

4

d

3

4

*Fig. 3*

3a

3

3

4

3

4

D

*Fig. 4*

3

4

3b

1

2

3b

3

*Fig. 5*

4

Fig. 6

Fig. 7

Fig. 8

Office européen
des brevets

**RAPPORT DE RECHERCHE EUROPEENNE**

Numero de la demande

EP    90 42 0568

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | FR-E-2342433 (ETABLISSEMENTS DERVAUX)<br>* page 2, ligne 11 - page 4, ligne 4; figures 3-9 *<br>--- | 1, 3 | H02G1/02<br>H02G7/05 |
| A | FR-A-1382034 (ETABLISSEMENTS DERVAUX)<br>* page 2, colonne de gauche, alinéas 2 - 3; figures 1, 4 *<br>----- | 1 | |

DOMAINES TECHNIQUES
RECHERCHES (Int. Cl.5)

H02G

Le présent rapport a été établi pour toutes les revendications

| Lieu de la recherche | Date d'achèvement de la recherche | Examinateur |
|---|---|---|
| LA HAYE | 14 MARS 1991 | RIEUTORT A. S. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................
& : membre de la même famille, document correspondant

EPO FORM 1503 03.82 (P0402)